# EUROPÄISCHE PATENTSCHRIFT

(11) **EP 3 212 470 B1**
(45) Veröffentlichungstag und Bekanntmachung des Hinweises auf die Patenterteilung: **19.09.2018**
(21) Anmeldenummer: 15748174.8
(22) Anmeldetag: 31.07.2015
(51) Int. Cl.: B60R 21/38

(54) **KRAFTFAHRZEUG, UMFASSEND EINE FRONTKLAPPE, DIE ÜBER ZWEI SCHARNIERGELENKE SCHWENKBAR AN EINER KAROSSERIE ANGEORDNET IST**
MOTOR VEHICLE COMPRISING A FRONT FLAP WHICH IS ARRANGED PIVOTABLY ON A BODY VIA TWO HINGE JOINTS
VÉHICULE AUTOMOBILE, COMPRENANT UN CAPOT AVANT QUI EST AGENCÉ SUR UNE CARROSSERIE DE MANIÈRE À POUVOIR PIVOTER PAR L'INTERMÉDIAIRE DE DEUX ARTICULATIONS À CHARNIÈRE

(30) Priorität: 29.10.2014 DE 102014015998
(43) Veröffentlichungstag der Anmeldung: 06.09.2017
(73) Patentinhaber: Audi AG, 85045 Ingolstadt (DE)
(72) Erfinder: SCHABENBERGER, Richard, 85126 Münchsmünster (DE); DIX, Norman, 85080 Gaimersheim (DE)
(86) Internationale Anmeldenummer: PCT/EP2015/001584
(87) Internationale Veröffentlichungsnummer: WO 2016/066234

(56) Entgegenhaltungen:
- DE-A1-102008 050 678

## Beschreibung

Moderne Kraftfahrzeuge verfügen mitunter über Schutzsysteme, die im Falle einer Kollision das Kollisionsobjekt, wenn es sich bei diesem um eine Person handelt, vor gravierenden Verletzungen schützen sollen. Ein solches Schutzsystem ist der sogenannte "Fußgängerschutz". Dieses Schutzsystem bewirkt, dass eine Frontklappe, also die Motorhaube, die über zwei Scharniergelenke schwenkbar an der Karosserie angeordnet ist, entgegen der üblichen Aufschwenkrichtung mit dem der Windschutzscheibe benachbarten Klappenende hochgestellt, also angehoben werden kann. Dieses Anheben der Frontklappe, die hierbei nur um wenige Zentimeter angehoben wird, schafft mehr Abstand und damit Raum zu unterhalb der Frontklappe befindlichen Bauteilen, insbesondere dem Motor, wodurch sich im Falle einer Kollision das Verletzungsrisiko für die Person reduzieren lässt.

Aus DE 10 2005 022 924 A1 ist ein Kraftfahrzeug mit einer Frontklappe, die über zwei Scharniergelenke schwenkbar an einer Karosserie angeordnet ist, bekannt. Ein solches Scharnier weist einen ersten Scharnierschenkel mit einem ersten Befestigungsabschnitt zum Befestigen an der Frontklappe und einen zweiten Scharnierschenkel mit einem zweiten Befestigungsabschnitt zum Befestigen an der Karosserie auf, wobei die beiden Scharnierschenkel jeweils Anlenkabschnitte aufweisen, die derart miteinander gelenkverbunden sind, dass die Scharnierschenkel aus einer einer Geschlossenstellung der Frontklappe entsprechenden ersten Winkelstellung der Anlenkabschnitte zueinander in eine einer Offenstellung der Frontklappe entsprechenden zweiten Winkelstellung verschwenkbar sind. Hierbei ändert sich der Winkel zwischen den Anlenkabschnitten stetig in eine Richtung. Des Weiteren ist eine Hubvorrichtung vorgesehen, deren Betätigung in der Geschlossenstellung der Frontklappe den ersten Befestigungsabschnitt vom zweiten Befestigungsabschnitt derart beabstandet, dass die Frontklappe angehoben wird. Der Winkel im Rahmen dieser Hubbetätigung ändert sich in derselben Richtung.

Aus DE 103 43 882 A1 ist eine Frontklappenanordnung an einem Kraftfahrzeug bekannt, mit zumindest einer in Fahrtrichtung betrachtet hinten liegenden Scharniereinrichtung in Form eines Viergelenks. Dieses umfasst einen langen und einen kurzen Lenker, wobei mittels der Scharniereinrichtung die Frontklappe beim normalen Öffnen und Schließen verschwenkbar und bei einer Kollision des Fahrzeugs im hinteren Bereich anhebbar ist. Hierzu weist die Scharniereinrichtungen einen Energiespeicher auf, der bei einer Kollision des Fahrzeugs eine Verstelleinrichtung betätigt, die wiederum direkt auf die Frontklappe einwirkt und mit dieser in lösbarer Verbindung steht. Das frontklappenseitige Gelenk des Viergelenks ist hierbei gelenkig an einem Schwenkhebel festgelegt, der im Ruhezustand mit einem Ende lösbar an der Frontklappe festgelegt und mit einem anderen Ende um ein im Bereich der Anlenkung der Verstelleinrichtung an der Frontklappe angeordnetes Drehgelenk relativ zur Frontklappe verschwenkbar ist. Die Verstelleinrichtung hebt bei einer Kollision des Fahrzeugs die Frontklappe, geführt durch die Lenker des Viergelenks und dem einseitig von der Frontklappe sich lösenden Schwenkhebel, gegenüber dem Ruhezustand an.

In DE 10 2004 007 858 A1 ist eine Frontklappenanordnung an einem Fahrzeug beschrieben, mit zumindest einer Scharniereinrichtung in Form eines Viergelenks, über das die Frontklappe beim normalen Öffnen und Schließen verschwenkbar und bei einer Kollision des Fahrzeugs im hinteren Bereich anhebbar ist. Eine solche Scharniereinrichtung weist ein Federelement auf, das bei einer Kollision des Fahrzeugs einen Verstellhebel betätigt, der wiederum direkt auf die Frontklappe einwirkt und an dieser direkt oder über Zwischenelemente anliegt. Die frontklappenseitigen Gelenke des Viergelenks sind hierbei gelenkig an einem Schwenkhebel festgelegt, der im Ruhezustand mit einem Ende lösbar an der Frontklappe festgelegt und mit seinem anderen Ende um ein im Bereich der Zuordnung des Verstellhebels zu der Frontklappe angeordnetes Drehgelenk relativ zur Frontklappe verschwenkbar ist. Der Verstellhebel hebt bei einer Kollision die Frontklappe, geführt durch die Lenker des Viergelenks und den einseitig sich von der Frontklappe lösenden Schwenkhebel, gegenüber dem Ruhezustand an.

DE 100 55 828 A1 offenbart eine Scharniereinrichtung für ein Kraftfahrzeug zum Anlenken einer Fronthaube eines Kraftfahrzeugs in Kombination mit einer Sicherheitseinrichtung zum Verlagern der Fronthaube in eine angehobene Position. Die Scharniereinrichtung weist ein Mehrgelenkscharnier auf, mittels welchem die Fronthaube von der Fahrzeugfrontseite her öffenbar ist. Die Sicherheitseinrichtung weist zumindest einen über die Signale einer Sensorik betätigbaren Aktuator auf, mittels welchem die Fronthaube aus ihrer geschlossenen Ausgangslage in eine zumindest im Bereich der Frontscheibe angehobene Position verlagerbar ist. Zum sicherheitsbedingten Anheben der Fronthaube ist die Wirkverbindung der Scharniereinrichtung zwischen der Fronthaube und der Karosserie aufhebbar bzw. unterbrechbar.

Schließlich ist aus DE 101 11 146 A1 eine aufschwenkbare Klappe eines Kraftfahrzeugs bekannt, mit einem Schloss, welches ein klappenseitiges erstes Schlossteil und ein karosserieseitiges zweites Schlossteil aufweist, und mit einem Scharnier, welches ein klappenseitiges erstes Scharnierteil und ein karosserieseitiges zweites Scharnierteil aufweist. Die Klappe ist nach Öffnen des Schlosses, wobei die beiden Schlossteile voneinander getrennt werden, aufschwenkbar und in einem geschlossenen Zustand, in dem die beiden Schlossteile aneinander gefesselt sind, auslösergesteuert in eine Spaltabstandsstellung zur Karosserie katapultierbar. Hierzu wird die Klappe durch die Kraft mindestens eines bei der Auslösung freigegebenen Kraftspeichers in die Spaltabstandsstellung gebracht.

Der Erfindung liegt das Problem zugrunde, ein Kraftfahrzeug bzw. eine Frontklappenanordnung anzugeben, die kompakt aufgebaut ist und eine sichere Bewegung der Frontklappe sowohl in die übliche Offenstellung als auch in die angehobene Schutzstellung ermöglicht.

Zur Lösung dieses Problems ist bei einem Kraftfahrzeug der eingangs genannten Art erfindungsgemäß vorgesehen, dass jedes Scharniergelenk ein karosserieseitig angeordnetes Scharnierunterteil und ein klappenseitig angeordnetes Scharnieroberteil, die über eine erste und eine zweite an ihnen schwenkbar angeordnete Schwenkstrebe miteinander verbunden sind, umfasst, wobei das Scharnieroberteil aus einem ersten, klappenseitig befestigten Oberteilabschnitt und einem an diesem schwenkbar angeordneten, über ein Arretiermittel lösbar fixierten zweiten Oberteilabschnitt, an dem die beiden Schwenkstreben schwenkbar angeordnet sind, besteht, und wobei die erste Schwenkstrebe aus einem am Scharnierunterteil angeordneten ersten Strebenabschnitt und einem am zweiten Oberteilabschnitt angeordneten und relativ zum ersten Strebenabschnitt translatorisch bewegbaren zweiten Strebenabschnitt besteht, und wobei ein ansteuerbares, mit dem zweiten Oberteilabschnitt gekoppeltes oder koppelbares Stellelement vorgesehen ist, das die Frontklappe in eine Schutzstellung anhebt, während welcher Anhebebewegung unter Lösen des Arretiermittels der zweite Oberteilabschnitt um seine Schwenkverbindung zum ersten Oberteilabschnitt bei gleichzeitiger translatorischer Bewegung des zweiten Strebenabschnitts relativ zum ersten Strebenabschnitt und um seine Schwenkverbindung zur zweiten Schwenkstrebe verschwenkt.

Jedes Scharniergelenk, über das die Frontklappe, die insbesondere als "umgreifende" Frontklappe, die seitlich die Karosserie etwas umgreift, ausgeführt ist, gelagert ist, weist erfindungsgemäß ein Scharnierunterteil, das karosserieseitig befestigt, üblicherweise verschraubt ist, sowie ein Scharnieroberteil, das klappenseitig befestigt ist, auf. Scharnieroberteil und Scharnierunterteil sind über eine "Unterbaugruppe" bestehend aus zwei Schwenkstreben, die am Oberteil und am Unterteil schwenkbar angeordnet sind, miteinander verbunden. Grundsätzlich sind die Scharniergelenke nach wie vor als Viergelenke ausgeführt, jedoch, worauf nachfolgend noch eingegangen wird, mit spezifischen Ausgestaltungen hinsichtlich des Scharnieroberteils sowie einer der Schwenkstreben.

Das Scharnieroberteil ist zweiteilig ausgeführt. Es besteht aus einem ersten und einem zweiten Oberteilabschnitt. Der erste Oberteilabschnitt ist klappenseitig befestigt. An ihm ist, vorzugsweise endseitig, der zweite Oberteilabschnitt schwenkbar angeordnet. In der Grundstellung, wenn die Klappe geschlossen ist und lediglich zu Servicezwecken geöffnet werden soll, sind beide Oberteile über ein Arretiermittel, das jedoch lösbar ist, aneinander fixiert, bilden also quasi eine insoweit starre Einheit.

An dem zweiten Oberteilabschnitt sind die beiden Schwenkstreben schwenkbar angeordnet, die mit dem anderen Ende schwenkbar an dem Scharnierunterteil befestigt sind. Wird nun die Frontklappe in üblicher Weise aufgeschwenkt, so klappt das Scharnieroberteil mit beiden aneinander arretierten Oberteilabschnitten nach oben, gleichzeitig verschwenken hierbei die Schwenkstreben um ihre jeweiligen Anlenkpunkte am Scharnieroberteil und am Scharnierunterteil.

Wird hingegen das Schutzsystem aktiviert, soll also die Frontklappe zum Fußgängerschutz aufgestellt werden, so wird durch entsprechende Ansteuerung über ein zugeordnetes Steuergerät das Stellelement angesteuert. Dieses ist mit dem zweiten Oberteilabschnitt gekoppelt oder koppelbar, wirkt also auf diesen. Anderen Endes ist das Stellelement positionsfest. Mit der Ansteuerung wird zum Anheben der Frontklappe ein hoher Druck über das Stellelement auf den zweiten Oberteilabschnitt ausgeübt, womit einhergeht, dass das Arretiermittel, das den ersten und den zweiten Oberteilabschnitt miteinander fixiert hat, gelöst wird, so dass der zweite Oberteilabschnitt relativ zum ersten Oberteilabschnitt verschwenken kann. Da mit dieser Verschwenkung eine Positionsverschiebung der Schwenkachse, mit der die erste Schwenkstrebe am zweiten Oberteilabschnitt befestigt ist, einhergeht, ist erfindungsgemäß die erste Schwenkstrebe zweiteilig ausgeführt. Sie besteht aus einem am Scharnierunterteil angeordneten ersten Strebenabschnitt und einem am zweiten Oberteilabschnitt angeordneten, zweiten Oberteilabschnitt. Der zweite Strebenabschnitt ist relativ zum ersten Strebenabschnitt translatorisch bewegbar, das heißt, dass letztlich die Länge der ersten Schwenkstrebe variabel ist. Wird nun durch Ansteuerung des Stellelements und Lösen des Arretiermittels die Frontklappe aufgestellt, so kommt es zu einer Verschwenkbewegung des zweiten Oberteilabschnitts, der um seine Anlenkung am ersten Oberteilabschnitt sowie seine Anlenkung an der zweiten Schwenkstrebe dreht. Gleichzeitig wird die erste Schwenkstrebe durch translatorische Bewegung des zweiten Strebenabschnitts verlängert, bis in eine maximale Ausfahrstellung, die erreicht wird, wenn die Anhebestellung erreicht ist.

Durch Lagerung der Frontklappe über zwei derartige erfindungsgemäße Scharniergelenke kann folglich ein aktiver Fußgängerschutz insbesondere auch bei "umgreifenden" Frontklappen, die zur Vermeidung einer Kollision mit der Karosserie beim üblichen Aufschwenken einer besonderen Bewegungsmechanik bedürfen, erreicht werden, wobei gleichzeitig die Frontklappe in eine definierte Endstellung bewegt werden kann. Die Frontklappe kann nach dem Aufstellen auf einfache Weise wieder in die Schließstellung zurückbewegt werden, indem sie niedergedrückt wird. Hierbei ist lediglich mit geringer Kraft gegen die betätigten Elemente der Gelenkmechanik zu arbeiten, das heißt, dass durch Drücken auf die Frontklappe die verlängerte erste Schwenkstrebe wieder in ihre Ausgangsstellung gedrückt wird, womit einhergeht, dass auch die beiden Oberteilabschnitte wieder in ihre Grundstellung bewegt werden. Je nach Ausgestaltung des Arretiermittels, worauf nachfolgend noch eingegangen wird, kann dieses in der zurückgedrückten Endstellung erneut die Arretierung der Oberteilabschnitte vornehmen. Je nach Ausgestaltung des Stellelements kann hierbei gegebenenfalls auch noch gegen das Stellelement zu arbeiten sein, was jedoch mit ebenfalls geringem Kraftaufwand möglich ist.

Der zweite Strebenabschnitt kann in Weiterbildung der Erfindung längs einer geraden Bahn oder längs einer gekrümmten Bahn relativ zum ersten Strebenabschnitt bewegbar sein, je nachdem, wie die Bewegungsmechanik konkret realisiert wird.

Zweckmäßig ist es dabei, wenn an einem der beiden Strebenabschnitte ein Langloch ausgebildet ist, in das ein am anderen Strebenabschnitt vorgesehener Führungszapfen eingreift. Es wird also eine Kulissenführung realisiert, die eine sichere Führung der beiden Strebenabschnitte relativ zueinander ermöglicht. Dabei kann der Führungsabschnitt in der Schließstellung in einer über eine Einschnürung gebildeten Rastaufnahme des Langlochs aufgenommen sein, worüber eine zusätzliche Arretierung der Aufstellmechanik gegeben ist. Des Weiteren kann durch entsprechende geometrische Ausbildung des Langlochs, das beispielsweise in seiner Breite leicht variieren kann, eine gewisse Systemdämpfung erreicht werden, indem der Führungszapfen nach Ansteuerung des Stellelements gegebenenfalls gegen einen gewissen, über die Langlochbreite definierten Widerstand im Langloch bewegbar ist.

Alternativ zur Ausgestaltung einer Kulissenführung mit Langloch und Führungszapfen ist es denkbar, an einem Strebenabschnitt seitliche Führungslaschen auszubilden, die den anderen Strebenabschnitt seitlich umgreifen. Auch hierüber kann eine einfache und sichere Linearführung erreicht werden.

Zweckmäßig ist es des Weiteren, eine Halteeinrichtung vorzusehen, über die die erste Schwenkstrebe nach Bewegen des zweiten Strebenabschnitts gegen ein Verschwenken relativ zum Scharnierunterteil gesichert ist. Über eine solche Halteeinrichtung kann, wenn der Aufstellprozess eingeleitet ist, verhindert werden, dass es zu einer unbeabsichtigten Öffnung der Klappe kommt. Die Klappe kann also nicht geöffnet werden, solange sie zum Fußgängerschutz angestellt ist.

Die Halteeinrichtung kann dabei einen am zweiten Strebenabschnitt vorgesehenen laschen- oder vorsprungartigen Halteabschnitt und eine am Scharnierunterteil vorgesehene Halteaufnahme umfassen, wobei der Halteabschnitt bei Erreichen der Endstellung die Halteaufnahme hintergreift oder in diese eingreift. Alternativ hierzu kann die Halteeinrichtung auch einen Haken oder eine Hakenaufnahme umfassen, wobei der Haken bei Erreichen der Endstellung an der Hakenaufnahme angreift. Beide Ausgestaltungen lassen eine sichere Gelenkfixierung zu. Die Haltevorrichtung ist dafür vorgesehen, dass das Viergelenk nicht unbeabsichtigt öffnet und eine undefinierte Bewegung entsteht. Auch kann die Klappe vom Benutzer nicht mehr geöffnet werden.

Das Arretiermittel, über das die beiden Oberteilabschnitte in ihre Grundstellung aneinander arretiert sind, wird gemäß einer vorteilhaften Weiterbildung der Erfindung bei Betätigung des Stellelements automatisch gelöst und ist z. B. in Form eines Arretierhakens ausgebildet. Der Arretierhaken ist am einen Oberteilabschnitt angeordnet und greift in einen entsprechenden Hakenabschnitt am anderen Oberteilabschnitt ein. Bevorzugt befindet sich dabei der Arretierhaken am zweiten Oberteilabschnitt, während der Hakenabschnitt am ersten Oberteilabschnitt vorgesehen ist. In der Arretierstellung hintergreift der Arretierhaken den Hakenabschnitt. Das Stellelement ist bevorzugt mit dem Arretierhaken gekoppelt, so dass der Arretierhaken bei Ansteuerung des Stellelements automatisch aus seinem Arretiereingriff gelöst wird, insbesondere durch Ausschwenken. Das heißt, dass der Arretierhaken bevorzugt schwenkbar am zweiten Oberteilabschnitt angeordnet ist und bevorzugt mit einem Federelement gekoppelt ist, das ihn automatisch in die Arretierstellung zieht. Wird nun das Stellelerment angesteuert, so wird der Arretierhaken aus seiner Arretierstellung gegen die Rückstellkraft des Federelements gezogen, woraufhin die Arretierung aufgehoben wird und die beiden Oberteilabschnitte relativ zueinander einknicken können.

Alternativ zur Verwendung eines Arretierhakens ist es auch denkbar, das Arretiermittel in Form eines abscherbaren Bolzens oder Niets vorzusehen. Am einen Oberteilabschnitt ist beispielsweise ein Bolzen vorgesehen, der in eine entsprechende Bolzenaufnahme eingesetzt ist, und der in eine entsprechende Ausnehmung am anderen Oberteilabschnitt eingreift. Wird nun mit hoher Kraft auf den zweiten Oberteilabschnitt bei Ansteuerung des Stellelements gedrückt, so wird der Bolzen abgeschert, bricht also, worüber die Arretierung freigegeben wird und die Oberteilabschnitte relativ zueinander einknicken können. Das Stellelement muss hier nicht permanent mit dem zweiten Oberteilabschnitt gekoppelt sein, sondern kann nach seiner Ansteuerung erst gegen diesen mit hoher Kraft laufen. Bei dieser Ausgestaltung des Arretiermittels ist eine erneute Arretierung der beiden Oberteilabschnitte nach manuellem Niederdrücken der Frontklappe in die originäre Schließstellung nicht mehr möglich, während bei Ausgestaltung der Arretiermittel mit vorzugsweise schwenkbarem Arretierhaken der Arretierhaken erneut arretieren kann.

Das Stellelement selbst ist bevorzugt ein pyrotechnischer Linearaktuator. Das heißt, dass das Stellelement durch Gabe eines entsprechenden Zündsignals zündet und eine lineare Stellbewegung durchführt, so dass folglich eine translatorische Bewegungsbahn respektive Aktivierungsbahn realisiert ist, längs welcher die Stellbewegung erfolgt. Da ein solcher pyrotechnischer Linearaktuator nur einmal betätigt werden kann, folglich keine gespeicherte Energie mehr enthält respektive keine Rückstellkraft beim Zurückbewegen aufgebaut wird, kann die Frontklappe nach dem Anheben wie beschrieben mit geringem Kraftaufwand wieder zurück in die Schließstellung gedrückt werden.

Das Stellelement selbst, also insbesondere der pyrotechnische Linearaktuator, ist wie beschrieben mit einem Ende mit dem zweiten Oberteilabschnitt gekoppelt. Das andere Ende ist während der Aufstellbewegung positionsfest. Es kann an der Karosserie angeordnet sein, alternativ auch am Scharnierunterteil. Denkbar ist es auch, das andere Ende des Stellelements am ersten Strebenabschnitt anzuordnen. Während der Aufstellbewegung verbleibt der erste Strebenabschnitt positionsfest, so dass das Stellelement hinreichend aufgelagert ist. Wird die Frontklappe jedoch in üblicher Weise zu Servicezwecken hochgeklappt, so bewegt sich das Stellelement letztlich mit der ersten Schwenkstrebe, schwenkt also mit.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Teilansicht eines erfindungsgemäßen Kraftfahrzeugs mit Teilansicht der Frontklappe und einem Scharniergelenk im geschlossenen Zustand,
- Fig. 2: das Scharniergelenk aus Fig. 1 in vergrößerter Darstellung,
- Fig. 3: eine Teilansicht entsprechend Fig. 1 mit in die Schutzstellung angehobener Frontklappe,
- Fig. 4: das Scharniergelenk aus Fig. 3,
- Fig. 5: die Anordnung aus Fig. 1 in der üblichen aufgeschwenkten Offenstellung, und
- Fig. 6: das Scharniergelenk aus Fig. 5.

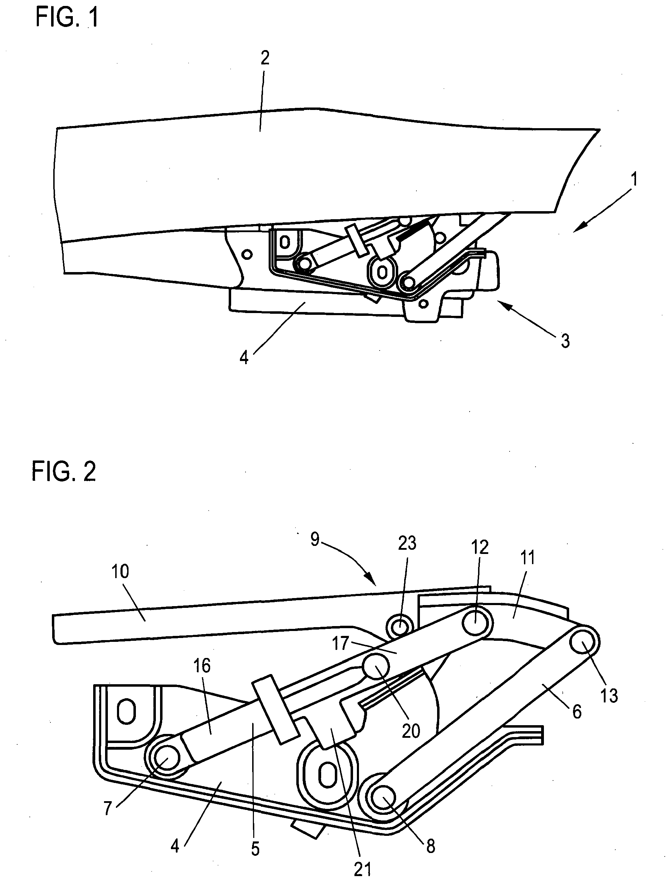

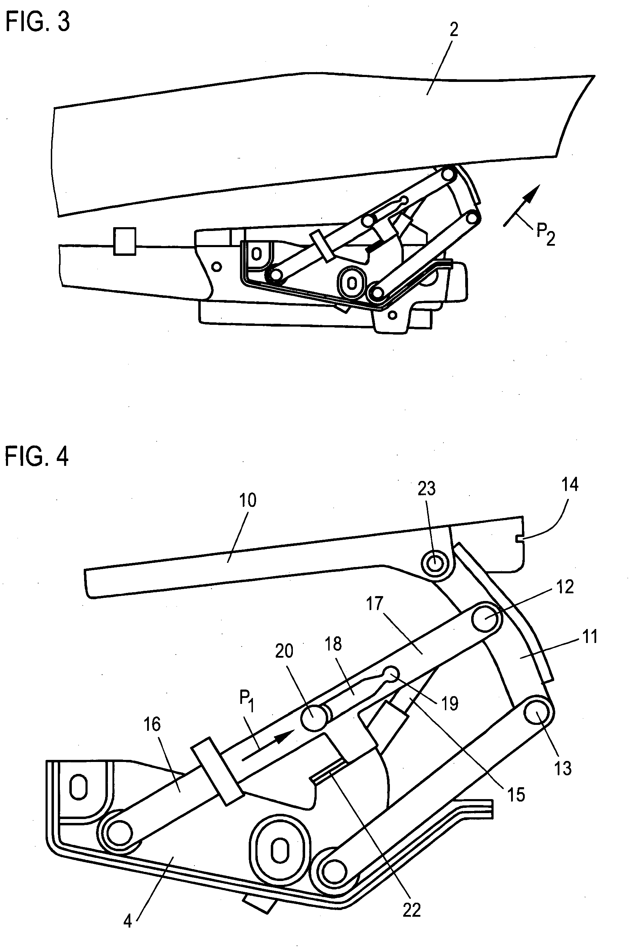

Fig. 1 zeigt eine Teilansicht eines erfindungsgemäßen Kraftfahrzeugs 1, wobei hier ein Teil der Frontklappe 2 dargestellt ist, sowie ein diese an einer nicht näher gezeigten Karosserie lagerndes Scharniergelenk 3. Das Scharniergelenk 3 umfasst, siehe hierzu auch Fig. 2, ein karosserieseitig zu befestigendes Scharnierunterteil 4. An diesem ist eine erste Schwenkstrebe 5 und eine zweite Schwenkstrebe 6 in entsprechenden Schwenklagern 7, 8 gelagert. Die beiden Schwenkstreben 5, 6 verbinden das Scharnierunterteil 4 mit einem Scharnieroberteil 9. Das Scharnieroberteil 9 besteht aus einem ersten Oberteilabschnitt 10 und einem zweiten Oberteilabschnitt 11. Die beiden Schwenkstreben 5, 6 sind über entsprechende Schwenklager 12, 13 am zweiten Oberteilabschnitt 11 schwenkgelagert. Die beiden Oberteilabschnitte 10, 11 ihrerseits sind über ein Schwenklager 23 miteinander verbunden, können also relativ zueinander verschwenken. In der in den Figuren 1 und 2 gezeigten Stellung sind die beiden Scharnieroberteile 10, 11 über Arretiermittel fest, jedoch lösbar miteinander verbunden. Diese Arretiermittel können beispielsweise einen am zweiten Oberteilabschnitt 11 vorgesehenen, abzuscherenden Bolzen umfassen, der in der Schließstellung in eine Bolzenaufnahme 14, siehe hierzu Fig. 4, eingreift. Der Bolzen wird abgeschert, wenn die Frontklappe angestellt wird, worauf nachfolgend noch eingegangen wird. Alternativ zur Bolzenarretierung ist es auch denkbar, am zweiten Oberteilabschnitt 11 einen schwenkbar gelagerten Arretierhaken anzubringen, der einen Hakenabschnitt am ersten Scharnieroberteil 10 hintergreift. Beim Anstellen wird diese Hakenarretierung gelöst, indem der Arretierhaken gegen die Rückstellkraft einer Feder oder dergleichen aus der Raststellung geschwenkt wird, was über ein nachfolgend noch beschriebenes Stellelement erfolgen kann.

Des Weiteren ist, siehe hierzu Fig. 4, ein ansteuerbares Stellelement 15, insbesondere in Form eines pyrotechnischen Linearaktuators, vorgesehen. Bei der hier beschriebenen Ausführungsform ist das Stellelement mit einem Ende, hier dem unteren Ende, am Scharnierunterteil bzw. karosseriefest befestigt. Das andere Ende des Stellelements 15 ist benachbart zum zweiten Scharnieroberteil 11 angeordnet, und zwar bevorzugt in einem Bereich nahe dem Scharniergelenk 23, mit dem zweiten Scharnieroberteil 11 jedoch nicht fest verbunden.

Des Weiteren zeichnet sich das Scharniergelenk 3 dadurch aus, dass die erste Schwenkstrebe 5 aus einem ersten Strebenabschnitt 16, der über das Scharniergelenk fest mit dem Scharnierunterteil verbunden ist, und einem zweiten Strebenabschnitt 17, der über das Scharniergelenk 12 mit dem zweiten Oberteilabschnitt 11 verbunden ist, besteht. Der Scharnierabschnitt 17 ist relativ zum ersten Scharnierabschnitt 16 translatorisch bewegbar, das heißt, dass die Schwenkstrebe 5 ihre Länge ändern kann. Hierzu ist, siehe Fig. 4, am zweiten Strebenabschnitt 17 ein Langloch 18 ausgebildet, das an seinem einen Ende eine Rastaufnahme 19 aufweist. Am ersten Strebenabschnitt 16 ist ein Führungszapfen 20 ausgebildet, der in das Langloch 18 eingreift und der in Fig. 2 gezeigten Schließstellung in der Rastaufnahme 19, die über eine entsprechende Einschnürung gebildet ist, aufgenommen ist.

In der Schließstellung, siehe Fig. 2, sind die beiden Oberteilabschnitte 10 und 11 miteinander arretiert, es bildet sich ein längliches Scharnieroberteil 9 aus. Die beiden Schwenkstreben 5, 6 liegen näherungsweise parallel zueinander, sind auf jeden Fall eingeschwenkt. Insbesondere ist die erste Schwenkstrebe 5 zusammengeschoben, der Führungszapfen 20 ist in der Rastaufnahme 19 aufgenommen.

Wird nun aufgrund eines sensierten Aufpralls der Fußgängerschutz aktiviert, so wird über eine nicht näher gezeigte Steuerungseinrichtung ein Ansteuersignal an das Stellelement 15 gegeben, das heißt, dass der pyrotechnische Linearaktuator gezündet wird. Da er karosserieseitig über das Scharnierunterteil 4 abgestützt ist, drückt er mit hoher Kraft gegen den zweiten Oberteilabschnitt 11. Durch diese hohe Kraft wird das Arretiermittel in Form des nicht näher gezeigten Bolzens, der in die Bolzenaufnahme 14 am ersten Oberteilabschnitt 10 eingreift, abgeschert. Da mit diesem Abscheren der zweite Oberteilabschnitt 11 quasi freigegeben wird, kann dieser relativ zum ersten Oberteilabschnitt 10 verschwenken und einknicken, wie in Fig. 4 gezeigt ist. Infolge des Ausfahrens des Stellelements 15 und der Bewegung des ersten Oberteilabschnitts 10 kommt es zwangsläufig zu einer translatorischen Bewegung des zweiten Strebenabschnitts 17 relativ zum ersten Strebenabschnitt 16, wobei diese translatorische Bewegung durch die Kulissenführung über das Langloch 18 und den Führungszapfen 20 geführt ist. Die erste Schwenkstrebe 5 wird ersichtlich gelängt. Daher und durch den Umstand, dass das zweite Scharnieroberteil 11 auch um das Scharniergelenk 13 schwenkt, kommt es zu einer Anhebebewegung der Frontklappe 2 nach schräg rechts oben, wie durch den Pfeil P2 dargestellt ist. Die Verlängerung der ersten Schwenkstrebe 5 ist über den Pfeil P1 dargestellt. Das Scharniergelenk 13 bewegt sich nach oben, mit ihm auch die Frontklappe 2, wie die Figuren 3 und 4 anschaulich zeigen.

Wäre, alternativ zum Arretiermittel umfassend den Bolzen und die Bolzenaufnahme 14, ein schwenkbarer Arretierhaken vorgesehen, so würde das Stellelement 15 direkt auf den schwenkbaren Arretierhaken wirken. Bei einer Ausfahrbewegung des Stellelements 15 würde dabei automatisch der Arretierhaken geschwenkt und aus seinem Arretiereingriff bewegt. Es käme sodann zur gleichen Anstellbewegung. Der Vorteil dieser Hakenlösung ist, dass nach Niederdrücken der aufgestellten Frontklappe 2 in die Geschlossenstellung gemäß der Figuren 1 und 2 eine erneute Arretierung der beiden Oberteilabschnitt 10 und 11 möglich ist, der Arretierhaken kann also wieder am Arretierabschnitt einrasten. Dies ist mit dem abgescherten Bolzen nicht mehr möglich.

Am zweiten Strebenabschnitt 17 ist ein laschenartiger Halteabschnitt 21 ausgebildet, der, wenn die Anhebebewegung erfolgt, eine Halteaufnahme 22, hier ebenfalls in Form einer Lasche, am Scharnierunterteil 2 hintergreift. Hierüber wird ausgeschlossen, dass eine ungewollte Bewegung die Öffnungskinematik während des Aktivierungsvorgangs einsetzt, das heißt, dass die Frontklappe 2 hierüber letztlich gegen ein normales Aufschwenken arretiert ist.

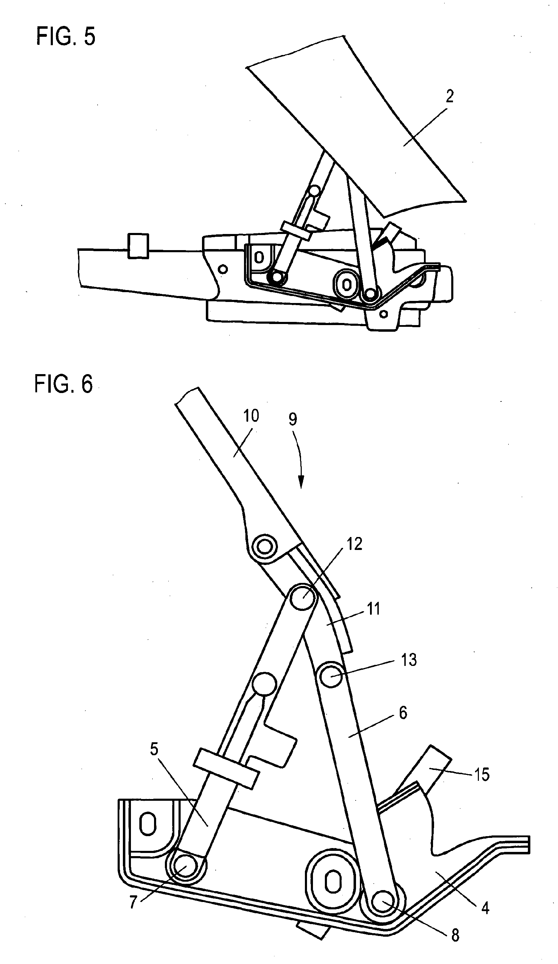

Die Figuren 5 und 6 zeigen den üblichen Öffnungsvorgang, wenn also die Frontklappe 2 zu Servicezwecken aufgeschwenkt wird. Der Aktuator 15 bleibt hierbei unbetätigt, das heißt, dass sich ausgehend von Fig. 2 die Länge der ersten Schwenkstrebe 5 nicht ändert. Auch bleiben die beiden Oberteilabschnitte 10 und 11 in ihrer Arretierverbindung. Wird ausgehend von Fig. 1 und 2 die Frontklappe aufgeschwenkt, so verschwenken die Schwenkstreben 5, 6 um ihre entsprechenden Schwenklager 7, 8 und 12, 13. Sie nehmen eine dreieckförmige Konfiguration relativ zueinander ein. Das Scharnieroberteil 9 bleibt in der ursprünglichen Form, die Frontklappe 2 wird also ohne Betätigung der Anstellmechanik über das Viergelenk aufgeschwenkt. In entsprechend umgekehrter Weise vollzieht sich natürlich die Schließbewegung, das heißt, es findet ein Wechsel zwischen der Scharniergelenkstellung aus Fig. 6 in die Scharniergelenkstellung aus Fig. 2 statt.

In Fig. 6 ist ersichtlich, dass das Stellelement 15 bei dieser Ausgestaltung nicht permanent mit dem zweiten Oberteilabschnitt 11 gekoppelt ist. Vielmehr ist es letztlich positionsfest angeordnet, der zweite Oberteilabschnitt 11 entfernt sich bei einer normalen Öffnungsbewegung vom Stellelement 15. In der Schließstellung jedoch befindet sich der Oberteilabschnitt 11 unmittelbar im Wirkbereich des Stellelements 15, so dass dieses bei Zündung unmittelbar auf den Oberteilabschnitt 11 wirkt, um den Anstellvorgang gemäß der Figuren 3 und 4 erwirken. Das heißt, dass eine permanente Verbindung nicht gegeben ist, vielmehr ist das Stellelement im Ansteuerfall erst mit dem zweiten Oberteilabschnitt 11 koppelbar.

Bei dem Stellelement 15 kann es sich um einen Einweg-Linearaktuator handeln, der also nur eine einmalige Ausschiebebewegung vornimmt. Daher ist es auch ohne weiteres möglich, die aufgestellte Frontklappe 2 aus der in Fig. 3 gezeigten Aufstellposition in die in Fig. 1 gezeigte Schließstellung niederzudrücken. Hierbei kommt es zu einer Abwärtsbewegung der beiden Oberteilabschnitte 10 und 11, diese nehmen wieder die in Fig. 2 gezeigte, nahezu parallele Grundstellung ein. Gleichzeitig wird auch die erste Schwenkstrebe 5 wieder zusammengeschoben. Eine erneute Arretierung ist wie beschrieben bei der Bolzenarretierung nicht möglich, wohl aber bei Ausbildung des beschriebenen Hakenarretiermittels.

## Patentansprüche

1. Kraftfahrzeug, umfassend eine Frontklappe, die über zwei Scharniergelenke schwenkbar an einer Karosserie angeordnet ist,
wobei jedes Scharniergelenk (3) ein karosserieseitig angeordnetes Scharnierunterteil (4) und ein klappenseitig angeordnetes Scharnieroberteil (9), die über eine erste und eine zweite an ihnen schwenkbar angeordnete Schwenkstrebe (5, 6) miteinander verbunden sind, umfasst, wobei das Scharnieroberteil (9) aus einem ersten, klappenseitig befestigten Oberteilabschnitt (10) und einem an diesem schwenkbar angeordneten, über ein Arretiermittel lösbar fixierten zweiten Oberteilabschnitt (11), an dem die beiden Schwenkstreben (5, 6) schwenkbar angeordnet sind, besteht, **dadurch gekennzeichnet, dass** die erste Schwenkstrebe (5) aus einem am Scharnierunterteil (4) angeordneten ersten Strebenabschnitt (16) und einem am zweiten Oberteilabschnitt angeordneten und relativ zum ersten Strebenabschnitt (16) translatorisch bewegbaren zweiten Strebenabschnitt (17) besteht, und wobei ein ansteuerbares, mit dem zweiten Oberteilabschnitt (11) gekoppeltes oder koppelbares Stellelement (15) vorgesehen ist, das die Frontklappe (2) in eine Schutzstellung anhebt, während welcher Anhebebewegung unter Lösen des Arretiermittels der zweite Oberteilabschnitt (11) um seine Schwenkverbindung (23) zum ersten Oberteilabschnitt (10) bei gleichzeitiger translatorischer Bewegung des zweiten Strebenabschnitts (17) relativ zum ersten Strebenabschnitt (16) und um seine Schwenkverbindung (13) zur zweiten Schwenkstrebe (6) verschwenkt.

2. Kraftfahrzeug nach Anspruch 1,
**dadurch gekennzeichnet,**
**dass** der zweite Strebenabschnitt (17) längs einer geraden Bahn oder längs einer gekrümmten Bahn relativ zum ersten Strebenabschnitt (16) bewegbar ist.

3. Kraftfahrzeug nach Anspruch 1 oder 2,
**dadurch gekennzeichnet,**
**dass** an einem der beiden Strebenabschnitte (17) ein Langloch (18) ausgebildet ist, in das ein am anderen Strebenabschnitt (16) vorgesehener Führungszapfen (20) eingreift.

4. Kraftfahrzeug nach Anspruch 3,
**dadurch gekennzeichnet,**
**dass** der Führungszapfen (20) in der Schließstellung in einer über eine Einschnürung gebildeten Rastaufnahme (19) des Langlochs (18) aufgenommen ist.

5. Kraftfahrzeug nach Anspruch 1 oder 2,
**dadurch gekennzeichnet,**
**dass** an einem Strebenabschnitt seitliche Führungslaschen ausgebildet sind, die den anderen Strebenabschnitt umgreifen.

6. Kraftfahrzeug nach einem der vorangehenden Ansprüche,
**dadurch gekennzeichnet,**
**dass** eine Halteeinrichtung vorgesehen ist, über die die erste Schwenkstrebe (5) nach Bewegen des zweiten Strebenabschnitts (17) gegen ein Verschwenken relativ zum Scharnierunterteil (4) gesichert ist.

7. Kraftfahrzeug nach Anspruch 6,
**dadurch gekennzeichnet,**
**dass** die Halteeinrichtung einen am zweiten Strebenabschnitt (17) vorgesehenen laschen- oder vorsprungartigen Halteabschnitt (21) und eine am Scharnierunterteil (4) vorgesehene Halteaufnahme (22) umfasst, wobei der Halteabschnitt (21) bei Erreichen der Endstellung die Halteaufnahme (22) hintergreift oder in diese eingreift.

8. Kraftfahrzeug nach Anspruch 6,
**dadurch gekennzeichnet,**
**dass** die Halteeinrichtung einen Haken und eine Hakenaufnahme umfasst, wobei der Haken bei Erreichen der Endstellung an der Hakenaufnahme angreift.

9. Kraftfahrzeug nach einem der vorangehenden Ansprüche,
**dadurch gekennzeichnet,**
**dass** das Arretiermittel ein bei Betätigung des Stellelements (15) automatisch gelöster Arretierhaken ist.

10. Kraftfahrzeug nach Anspruch 9,
**dadurch gekennzeichnet,**
**dass** der Arretierhaken am zweiten Oberteilabschnitt (11) angeordnet ist und einen Hakenabschnitt am ersten Oberteilabschnitt (10) hintergreift, wobei das Stellelement (15) mit dem Arretierhaken gekoppelt oder koppelbar ist und diesen aus seinem Arretiereingriff löst, insbesondere ausschwenkt.

11. Kraftfahrzeug nach einem der Ansprüche 1 bis 9,
**dadurch gekennzeichnet,**
**dass** das Arretiermittel ein abscherbarer Bolzen oder Niet ist.

12. Kraftfahrzeug nach einem der vorangehenden Ansprüche,
**dadurch gekennzeichnet,**
**dass** das Stellelement (15) an der Karosserie oder am Scharnierunterteil (4) oder am ersten Strebenabschnitt (16) angeordnet ist.

13. Kraftfahrzeug nach einem der vorangehenden Ansprüche,
**dadurch gekennzeichnet,**
**dass** das Stellelement (15) ein, vorzugsweise pyrotechnischer, Linearaktuator ist.

## Claims

1. Motor vehicle, comprising a front gate, which is arranged pivotably on a vehicle body by means of two hinge joints, wherein each hinge joint (3) comprises a body-side lower hinge part (4) and a gate-side upper hinge part (9) which are connected to one another by a first and a second pivot strut (5, 6) arranged pivotably thereon, wherein the upper hinge part (9) consists of a first gate-side secured upper part portion (10) and a second upper part portion (11) which is arranged pivotably on the first upper part portion and is fixed releasably by a locking member, on which second upper part portion the two pivot struts (5, 6) are arranged pivotably, **characterised in that** the first pivot strut (5) consists of a first strut portion (16) arranged on the lower hinge part (4) and a second strut portion (17) arranged on the second upper part portion which can be moved translationally relative to the first strut portion (16), and wherein a controllable actuator (15) is provided which is coupled or can be coupled to the second upper part portion, which actuator raises the front gate (2) into a protective position, during which lifting movement by releasing the locking member the second support part portion (11) pivots about its pivot connection (23) relative to the first upper part portion (10) with a simultaneous translational movement of the second strut portion (17) relative to the first strut portion (16) and about its pivot connection (13) to the second pivot strut (6).

2. Motor vehicle according to claim 1, **characterised in that** the second strut portion (17) can be moved along a straight path or along a curved path relative to the first strut portion (16).

3. Motor vehicle according to claim 1 or 2, **characterised in that** an elongated hole (18) is formed on one of the two strut portions (17), into which elongated hole a guiding pin (20) provided on the other strut portion (16) engages.

4. Motor vehicle according to claim 3, **characterised in that** the guiding pin (20) is received in the closed position in a locking mount (19) of the elongated hole (18) formed by a constriction.

5. Motor vehicle according to claim 1 or 2, **characterised in that** lateral guide tabs are formed on a strut portion which encompass the other strut portion.

6. Motor vehicle according to any of the preceding claims, **characterised in that** a holding device is provided by means of which the first pivot strut (5) is secured against pivoting relative to the lower hinge part (4) after moving the second strut portion (17).

7. Motor vehicle according to claim 6, **characterised in that** the holding device comprises a lug-like or projection-like retaining portion (21) which is provided on the second strut portion (17) and a retaining receiver (22) provided on the lower hinge part (4), wherein the retaining portion (21) engages behind or engages in the retaining receiver (22) when the end position has been reached.

8. Motor vehicle according to claim 6, **characterised in that** the holding device comprises a hook and a hook receiver, with the hook engaging in the hook receiver when the end position has been reached.

9. Motor vehicle according to any of the preceding claims, **characterised in that** the locking member is a locking hook which is automatically released when the actuator (15) is activated.

10. Motor vehicle according to claim 9, **characterised in that** the locking hook is arranged on the second upper part portion (11) and engages behind a hook portion on the first upper part portion (10), wherein the actuator (15) is coupled or can be coupled to the locking hook and releases the latter, in particular swings the latter out of locking engagement.

11. Motor vehicle according to any of claims 1 to 9, **characterised in that** the locking member is a bolt or rivet capable of being sheared off.

12. Motor vehicle according to any of the preceding claims, **characterised in that** the actuator (15) is arranged on the vehicle body or on the lower hinge part (4) or on the first strut portion (16).

13. Motor vehicle according to any of the preceding claims, **characterised in that** the actuator (15) is a linear actuator, preferably a pyrotechnical linear actuator.

## Revendications

1. Véhicule automobile, comprenant un capot, qui est disposé de manière à pouvoir pivoter au niveau d'une carrosserie par l'intermédiaire de deux articulations à charnière,
dans lequel
chaque articulation à charnière (3) comprend une partie inférieure de charnière (4) disposée côté carrosserie et une partie supérieure de charnière (9) disposée côté capot, qui sont reliées l'une à l'autre par l'intermédiaire d'une première et d'une deuxième entretoise de pivotement (5, 6) disposées au niveau desdites parties de manière à pouvoir pivoter, dans lequel la partie supérieure de charnière (9) est constituée d'une première section de partie supérieure (10) fixée côté capot et d'une deuxième section de partie supérieure (11) disposée au niveau de celle-ci de manière à pouvoir pivoter, fixée de manière amovible par l'intermédiaire d'un moyen d'arrêt, au niveau de laquelle les deux entretoises (5, 6) de pivotement sont disposées de manière à pouvoir pivoter, **caractérisé en ce que** la première entretoise de pivotement (5) est constituée d'une première section d'entretoise (16) disposée au niveau de la partie inférieure de charnière (4) et d'une deuxième section d'entretoise (17) disposée au niveau de la deuxième section de partie supérieure et pouvant être déplacée par translation par rapport à la première section d'entretoise (16), et dans lequel un élément de réglage (15) pouvant être piloté, couplé ou pouvant être couplé à la deuxième section de partie supérieure (11) est prévu, qui relève le capot (2) dans une position de protection, au cours du déplacement de relèvement de celui-ci, en déclenchant le moyen d'arrêt, la deuxième section de partie supérieure (11) pivote autour de sa liaison de pivotement (23) avec la première section de partie supérieure (10) lors d'un déplacement par translation simultané de la deuxième section d'entretoise (17) par rapport à la première section d'entretoise (16) et autour de sa liaison de pivotement (13) avec la deuxième entretoise de pivotement (6).

2. Véhicule automobile selon la revendication 1,
**caractérisé en ce**
**que** la deuxième section d'entretoise (17) peut être déplacée le long d'une voie rectiligne ou le long d'une voie incurvée par rapport à la première section d'entretoise (16).

3. Véhicule automobile selon la revendication 1 ou 2,
**caractérisé en ce**
**qu'**est réalisé au niveau d'une des sections d'entretoise (17), un trou oblong (18), avec lequel un tenon de guidage (20) prévu au niveau de l'autre section d'entretoise (16) vient en prise.

4. Véhicule automobile selon la revendication 3,
**caractérisé en ce**
**que** le tenon de guidage (20) est logé dans la position de fermeture dans un logement d'enclenchement (19), formé par l'intermédiaire d'un rétrécissement, du trou oblong (18).

5. Véhicule automobile selon la revendication 1 ou 2,
**caractérisé en ce**
**que** sont réalisées au niveau d'une section d'entretoise des brides de guidage latérales, qui entourent l'autre section d'entretoise.

6. Véhicule automobile selon l'une quelconque des revendications précédentes,
**caractérisé en ce**
**qu'**est prévu un dispositif de maintien, par l'intermédiaire duquel la première entretoise de pivotement (5) est bloquée après le déplacement de la deuxième section d'entretoise (17) pour empêcher un pivotement par rapport à la partie inférieure de charnière (4).

7. Véhicule automobile selon la revendication 6,
**caractérisé en ce**
**que** le dispositif de maintien comprend une section de maintien (21) de type bride ou partie faisant saillie prévue au niveau de la deuxième section d'entretoise (17) et un logement de maintien (22) prévu au niveau de la partie inférieure de charnière (4), dans lequel la section de maintien (21) vient en prise par l'arrière avec le logement de maintien (22) ou vient en prise avec celui-ci, lorsqu'une position finale est atteinte.

8. Véhicule automobile selon la revendication 6,
**caractérisé en ce**
**que** le dispositif de maintien comprend un crochet et un logement de crochet, dans lequel le crochet s'engage avec le logement de crochet lorsque la position d'extrémité est atteinte.

9. Véhicule automobile selon l'une quelconque des revendications précédentes,
**caractérisé en ce**
**que** le moyen d'arrêt est un crochet d'arrêt automatiquement déclenché lors de l'actionnement de l'élément d'élément de réglage (15).

10. Véhicule automobile selon la revendication 9,
**caractérisé en ce**
**que** le crochet d'arrêt est disposé au niveau de la deuxième section de partie supérieure (11) et vient en prise par l'arrière avec une section de maintien au niveau de la première section de partie supérieure (10), dans lequel l'élément de réglage (15) est couplé ou peut être couplé à l'arrêt de maintien et déclenche, en particulier fait pivoter, celui-ci hors de sa poignée d'arrêt.

11. Véhicule automobile selon l'une quelconque des revendications 1 à 9,
**caractérisé en ce**
**que** le moyen d'arrêt est un boulon ou un rivet pouvant être cisaillé.

12. Véhicule automobile selon l'une quelconque des revendications précédentes,
**caractérisé en ce**
**que** l'élément de réglage (15) est disposé au niveau de la carrosserie et au niveau de la partie inférieure de charnière (4) ou au niveau de la première section d'entretoise (16).

13. Véhicule automobile selon l'une quelconque des revendications précédentes,
**caractérisé en ce**
**que** l'élément de réglage (15) est un actionneur linéaire de préférence pyrotechnique.
